# EUROPÄISCHE PATENTSCHRIFT

(11) **EP 2 009 765 B1**
(45) Veröffentlichungstag und Bekanntmachung des Hinweises auf die Patenterteilung: **06.01.2010**
(21) Anmeldenummer: 08015363.8
(22) Anmeldetag: 02.04.2005
(51) Int. Cl.: H02J 9/00

(54) **Vorrichtung zur unterbrechungsfreien Stromversorgung**
Device for an uninterruptible power supply
Dispositif d'alimentation en courant continue

(30) Priorität: 14.04.2004 DE 102004018502
(43) Veröffentlichungstag der Anmeldung: 31.12.2008
(62) Teilanmeldung aus: 05732394.1
(73) Patentinhaber: Phoenix Contact GmbH & Co. KG, 32825 Blomberg (DE)
(72) Erfinder: Henkel, Hartmut, 32825 Blomberg (DE); Heinemann, Michael, 32791 Lage (DE); Zeuch, Jochen, 32825 Blomberg (DE)
(74) Vertreter: Blumbach - Zinngrebe

(56) Entgegenhaltungen:
- WO-A-03/060746
- WO-A-2004/012320
- US-A- 4 604 530
- US-A- 4 779 007
- US-A- 5 737 204
- US-B1- 6 329 796

## Beschreibung

Die Erfindung betrifft eine Vorrichtung zur unterbrechungsfreien Stromversorgung.

Um die Funktionsfähigkeit von elektronischen Geräten und Anlagen, wie zum Beispiel private Computernetze, auch bei Netzausfall sicherzustellen, werden sogenannte USV(unterbrechungsfreie Stromversorgungs)-Anlagen eingesetzt. USV-Anlagen sorgen dafür, dass bei Ausfall der Netzspannung eine Notstromversorgung der elektronischen Geräte oder Anlagen über die USV-Anlage erfolgt. Mit anderen Worten sorgt eine USV-Anlage dafür, dass bei einer Störung der Netzversorgung eine Umschaltung vom Netzbetrieb in einen Notstrombetrieb vorgenommen wird. Sobald die Netzversorgung wieder in Betrieb geht, schaltet die USV-Anlage vom Notstrombetrieb auf Netzbetrieb um.

Der Erfindung liegt die Aufgabe zugrunde, eine Vorrichtung zur unterbrechungsfreien Stromversorgung zu schaffen, die mit niedrigerer Verlustleistung als herkömmliche USV-Einrichtungen betrieben werden kann. Ein weiterer Gesichtspunkt der Erfindung liegt in einer Maßnahme zur Begrenzung des Ausgangsstroms im Notstrombetrieb. Noch ein weiterer Gesichtspunkt der Erfindung liegt darin, einem Benutzer das Anschalten weiterer elektrischer oder elektronischer Bauteile zu erleichtern.

Das technische Problem löst die Erfindung durch die Merkmale des Anspruchs 1.

Danach ist eine Vorrichtung zur unterbrechungsfreien Stromversorgung, kurz auch USV-Vorrichtung genannt, vorgesehen, welche Eingangsanschlüsse zum Anschalten an eine primäre Gleichspannungs-Versorgungseinrichtung, Anschlüsse zum Anschalten einer Ersatzstromquelle, erste Ausgangsanschlüsse zum Anschalten einer Last, eine Einrichtung zum Entkoppeln der Eingangsanschlüsse von den ersten Ausgangsanschlüssen bei Störung der primären Gleichspannungs-Versorgungseinrichtung, eine erste steuerbare Schalteinrichtung zum gesteuerten Anschalten der Ersatzstromquelle an die ersten Ausgangsanschlüsse bei Störung der primären Gleichspannungs-Versorgungseinrichtung und eine der ersten steuerbaren Schalteinrichtung zugeordnete Steuereinrichtung aufweist.

Weiterhin weist die Vorrichtung eine Parallelschaltung aus einer Diode und einer zweiten steuerbaren Schalteinrichtung auf, die die Entkopplungseinrichtung bilden. Ferner ist eine Überwachungseinrichtung zur Überwachung einer Eingangsspannung vorgesehen. Die Steuereinrichtung der USV-Vorrichtung schaltet die zweite steuerbare Schalteinrichtung aus, wenn die überwachte Eingangsspannung eine Störung der primären Energieversorgungseinrichtung signalisiert.

Die zweite steuerbare Schalteinrichtung kann ein Leistungstransistor, insbesondere ein Feldeffekttransistor sein.

Ein Vorteil der Verwendung eines zur Diode parallel geschalteten Feldeffekttransistsors ist darin zu sehen, dass die Verlustleistung im Netzbetrieb reduziert werden kann.

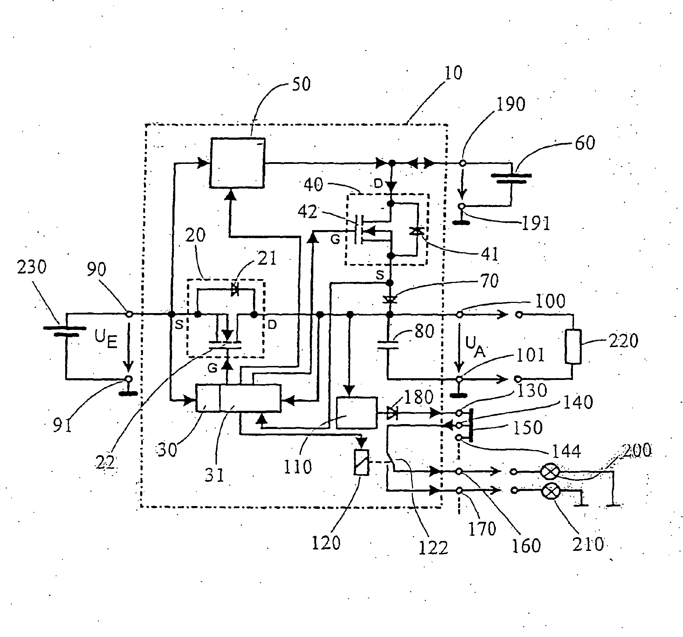

Die einzige Figur zeigt eine Vorrichtung zur unterbrechungsfreien Stromversorgung (USV), die nachfolgend kurz als USV-Vorrichtung bezeichnet wird. Die USV-Vorrichtung ist allgemein mit dem Bezugszeichen 10 versehen. Eingangsseitig weist die USV-Vorrichtung 10 zwei Eingangsklemmen 90, 91 auf, an die eine primäre Energieversorgungseinrichtung 230 angeschlossen ist, die im vorliegenden Beispiel eine Gleichspannung U_{E} liefert. Bei der primären Energieversorgungseinrichtung 230 kann es sich um ein 24V- Stromversorgungsgerät oder ein 24V-Netz handeln. Ausgangsseitig weist USV-Vorrichtung 10 zwei Ausgangsklemmen 100 und 101 auf, an die eine zu speisende, Last 220 angeschlossen ist. Zwischen der Eingangsklemme 90 und der Ausgangsklemme 100 ist eine Entkopplungseinrichtung 20 geschaltet. Die Entkopplungseinrichtung 20 weist eine Parallelschaltung aus einer Diode und einem Feldeffekttransistor 24 auf, der als Leistungstransistor betrieben wird. Der Kathodenanschluss ist mit der Ausgangsklemme 100 verbunden, wohingegen der Anodenanschluss der Diode 21 mit dem Eingangsanschluss 90 verbunden ist. Der Source-Anschluss S des Feldeffekttransistors 22 ist mit dem Anodenanschluss der Diode 21 verbunden, wohingegen der Drain-Anschluss D des Feldeffekttransistors 22 mit dem Kathodenanschluss der Diode 21 verbunden ist. Der Gate-Anschluss G des Feldeffekttransistors 22 ist mit einer Steuer- und Überwachungseinrichtung 30, 31 verbunden. Die Steuer- und Überwachungseinrichtung 30, 31 ist derart ausgebildet, dass sie den Feldeffekttransistor 22 über den Gate-Anschluss G im Netzbetrieb einschaltet und im Notstrombetrieb ausschaltet. Die Steuer- und Überwachungseinrichtung 30, 31 ist eingangsseitig mit dem Source-Anschluss S und dem Drain-Anschluss D des Feldeffekttransistors 22 verbunden, um die Eingangsspannung der USV-Vorrichtung 10 überwachen und auswerten zu können. Die Steuer- und Überwachungseinrichtung 30, 31 steuert den Gate-Anschluss G des Feldeffekttransistors 22 in Abhängigkeit von der überwachten Eingangsspannung an, um im Netzbetrieb die Verlustleistung zu reduzieren. Hierzu wird im Netzbetrieb der Feldeffekttransistor 22 über die Steuer- und Überwachungseinrichtung 30, 31 eingeschaltet, wodurch die Diode 21 überbrückt wird.

Ferner weist die USV-Vorrichtung 10 zwei Eingangsklemmen 190 und 191 auf, an die eine Ersatzstromquelle 60 angeschlossen ist. Die Ersatzstromquelle 60 kann wie im vorliegenden Beispiel ein Akkumulator sein. In diesem Fall ist zwischen der Eingangsklemme 90 und der Anschlussklemme 190 eine Ladeeinheit 50 geschaltet, die während des Netzbetriebes den Akkumulator 60 auflädt. Bei der Ladeeinheit 50 handelt es sich um eine an sich bekannte Einrichtung, welche automatisch erkennt, wenn der Akkumulator 60 aufgeladen ist. Die Ladeeinrichtung 50 wird ebenfalls über die Steuer- und Überwachungseinrichtung 30, 31 derart angesteuert, dass im Notstrombetrieb eine Aufladung des Akkumulator 60 nicht erfolgt. An dieser Stelle sei erwähnt, dass die Ladeeinrichtung 50 mehrere Funktionen bereitstellt. So dient sie einmal der Begrenzung des Ladestroms des Akkumulators 60. Ferner passt sie die Ladespannung im Verlauf der Aufladung an die Erfordernisse des Akkumulators 60 an. Die Aufladung wird beendet, wenn beispielsweise die primäre Energieversorgungseinrichtung 230 einen maximalen Laststrom bereitstellen muss. Eine Abschaltung der Batterieladung erfolgt ebenfalls, wenn der Akkumulator 60 aufgeladen ist.

Zwischen die Anschlussklemme 190 und Ausgangsklemme 100 ist eine weitere Schalteinrichtung 40 in Reihe mit einer Diode 70 geschaltet. Die Schalteinrichtung 40 enthält einen schnell schaltbaren Leistungstransistor 42 in Form eines Feldeffekttransistors 42, der zusammen mit der herstellungsbedingten inversen Diode 41 dargestellt ist. Der Drain-Anschluss D ist bei dieser Ausführungsvariante mit der Anschlussklemme 190 verbunden, während der Source-Anschluss S des schnell schaltbaren Feldeffekttransistors 42 mit dem Anodenanschluss der Diode 70 verbunden ist. Der Kathodenanschluss der Diode 70 ist mit der Ausgangsklemme 100 verbunden. Der Gate-Anschluss G des schnell schaltbaren Feldeffekttransistors 42 ist mit einem Ausgang der Steuer-und Überwachungseinrichtung 30, 31 verbunden. Die Diode 70 ist derart angeschaltet, dass sie im Notstrombetrieb in Durchlassrichtung und im Netzbetrieb in Sperrrichtung geschaltet ist, so dass im Netzbetrieb eine Ladung des Akkumulators 60 über die Schalteinrichtung 40 verhindert wird. Zwischen die Ausgangsklemmen 100 und 101 ist ein Kondensator 80 geschaltet, der insbesondere die im Notstrombetrieb vom Akkumulator 60 bereitgestellte Spannung glättet. Die Schalteinrichtung 40 dient zusammen mit der Diode 70 nicht nur zur Entkopplung des Akkumulator 60 von den Ausgangsklemmen 100 und 101, sondern auch zur Begrenzung des Notstroms während des Notstrombetriebs. Hierzu wird der Notstrom, das ist der durch den Feldeffekttransistor 42 fließende Strom des Notstrombetriebs, von der Steuer- und Überwachungseinrichtung 30, 31 überwacht und ausgewertet. In Abhängigkeit des gemessenen Notstroms wird der schnell schaltbare Feldeffekttransistor 42 über die Gate-Elektrode G pulsbreitenmoduliert, wodurch eine Reduktion des Stromes möglich ist.

An dieser Stelle sei kurz darauf hingewiesen, dass es erfindungsunerheblich ist, ob die Ersatzstromquelle 60, welche äquivalent auch als Ersatzspannungsquelle bezeichnet werden kann, interner Bestandteil der USV-Vorrichtung 10 ist, oder, wie in der Figur dargestellt, extern anschaltbar ist.

Gemäß einem weiteren Gesichtspunkt der Erfindung ist parallel zu den Ausgangsklemmen 100 und 101 ein strombegrenzter Speiseausgang 130 vorgesehen. Der Speiseausgang 130 ist über eine Diode 180 und einen Strombegrenzer 110 mit der Ausgangsklemme 100 verbunden. Der Kathodenanschluss der Diode 180 ist mit dem Speiseausgang 130 verbunden, wohingegen der Anodenanschluss der Diode 180 mit dem Ausgang des Strombegrenzers 110 verbunden ist. Auf diese Weise wird eine Rückspeisung der USV-Vorrichtung 10 über den Speiseausgang 130 vermieden.

Ferner weist die USV-Vorrichtung 10 vorzugsweise ein Wechselrelais auf, dessen symbolisch dargestellter Erregerstromkreis das Bezugszeichen 120 trägt, während der Ausgangsstromkreis des Wechselrelais durch das Bezugszeichen 122 gekennzeichnet ist. Der Erregerstromkreis 120 des Wechselrelais ist ausgangsseitig mit der Steuer-und Überwachungseinrichtung 30, 31 verbunden. Der Ausgangsstromkreis 122 weist im vorliegenden Beispiel drei Anschlüsse 140, 160 und 170 auf. An die Anschlüsse 160 und 170 können jeweils eine Leuchtdiode 200 beziehungsweise 210 zur Signalisierung des Zustandes der USV-Vorrichtung 10 angeschlossen sein. Beispielsweise signalisiert die Leuchtdiode 200, dass die USV-Vorrichtung 10 im Netzbetrieb arbeitet, während ein Aufleuchten der Leuchtdiode 210 signalisieren kann, dass die USV-Vorrichtung 10 im Notstrombetrieb arbeitet. Der weitere Anschlusskontakt 140 des Ausgangsstromkreises 122 ist in einem fest vorgegebenen Abstand zu dem Speiseausgang 130 angeordnet. Mittels einer entsprechend definierten Einlegebrücke 150 kann der Speiseausgang 130 mit der Ausgangsklemme 140 des Ausgangsstromkreises 122 kurzgeschlossen werden. Auf diese Weise ist es möglich, den Ausgangsstromkreis 122 des Wechselrelais fehlerfrei und sicher entweder im Netzbetrieb mit der Eingangsspannung U_{E} oder im Notstrombetrieb über den Akkumulator 60 zu speisen. Die Funktionsweise eines Wechselrelais ist allgemein bekannt, so dass eine detaillierte Beschreibung entfallen kann.

Wie bereits erwähnt, dient der Feldeffekttransistor 42 ferner dazu, während des Notstrombetriebs eine Strombegrenzung des Laststromes vorzunehmen. Erkennt die Steuer- und Überwachungseinrichtung 30, 31 dass der Strom durch den Feldeffekttransistor 42 zu groß wird, wird der Leistungsschalter 40 abgeschaltet. Nach einer kurzen Pause wird der Feldeffekttransistor 42 wieder eingeschaltet. Der Ein- und Aussschaltzyklus hängt von der Größe des überwachten Stromes durch die Drain-Source-Strecke des Feldeffekttransistors 42 ab, welche von der Steuer- und Überwachungseinrichtung 30, 31 überwacht und ausgewertet wird. Die Steuer- und Überwachungseinrichtung 30, 31 sorgt in Verbindung mit dem Feldeffekttransistor 42 dafür, dass im Notstrombetrieb hohe Kurzschlussströme wesentlich schneller und zuverlässiger begrenzt werden können als dies beispielsweise bei Verwendung von Relais der Fall ist. Um ein Laden des Akkumulators 60 während eines Netzbetriebes zu verhindern, ist die Diode 70 vorgesehen, da Feldeffekttransistoren keine inversen Spannungen sperren können, wie dies symbolisch durch die inverse Diode 41 angedeutet ist. Dank der dynamischen Strombegrenzung mit Hilfe der Steuer- und Überwachungseinrichtung 30, 31 und des Feldeffekttransistors 42 kann die Ausgangskennlinie der USV-Vorrichtung 10 der üblichen Ausgangskennlinie von Stromversorgungen angepasst und ein Spitzenstrom frühzeitig und zuverlässig begrenzt werden.

Nachfolgend wird die Funktionsweise USV-Vorrichtung 10 kurz erläutert.

Der einfacheren Erläuterung wegen sei angenommen, dass an die Eingangsklemme 90 und 91 eine Gleichspannung U_{E} angelegt sei, beispielsweise eine 24V-Gleichsspannung. Die Eingangsspannung wird von der Steuer- und Überwachungseinrichtung30, 31 an dem Source-Anschluss S und Drain-Anschluss D des Feldeffekttransistors 22 abgegriffen, überwacht und ausgewertet. Solange die Eingangsspannung U_{E} in einem vorgegebenen Toleranzbereich liegt, arbeitet die USV-Vorrichtung 10 im Netzbetrieb. Dies bedeutet, dass der Feldeffekttransistor 22 über den Gate-Anschluss G leitend gehalten wird. Für den Fall, dass der Akkumulator 60 nicht vollständig aufgeladen ist, erfolgt über die Ladeeinrichtung 50 die Aufladung des Akkumulators 60. Während des Netzbetriebs wird der zur Strombegrenzung benötigte Feldeffekttransistor 42 über die Steuer- und Überwachungseinrichtung 30, 31 im gesperrten Zustand gehalten. Die in Reihe zum Feldeffekttransistor 42 geschaltete Diode 70 verhindert einen unerwünschten Stromfluss über den Feldeffekttransistor 42 zum Akkumulator 60. Sobald die Steuer- und Überwachungseinrichtung 30, 31 eine Störung der Eingangsspannung U_{E}, das können unerwünschte Spannungsschwankungen oder der komplette Ausfall der primären Energieversorgungseinrichtung 230 sein, detektiert, wird der Feldeffekttransistor 22 über den Gate-Anschluss G ausgeschaltet, so dass eine Entkopplung zwischen den Eingangsklemmen 90, 91 und den Ausgangsklemmen 70, 100 und 101 stattfindet. Gleichzeitig wird der Feldeffekttransistor 42 über die Steuer- und Überwachungseinrichtung 30, 31 leitend geschaltet, so dass nunmehr eine Notstromversorgung der an die Ausgangsklemmen 100 und 101 angeschalteten Last 220 über den Akkumulator 6β erfolgt. Während des Notstrombetriebs überwacht die Steuer-und Überwachungseinrichtung 30, 31 den durch den Feldeffekttransistor 42 fließenden Strom, um ihn gegebenenfalls zu begrenzen. Wie bereits erwähnt, erfolgt die Begrenzung des Ausgangsstroms des Feldeffekttransistors 42 dadurch, dass die Steuer- und Überwachungseinrichtung 30, 31 über den Gate-Anschluss G eine Pulsbreitenmodulation des Ausgangsstroms durchführt, d. h. der Ein- und Ausschaltzyklus des Feldeffekttransistors 42 bestimmt dessen Ausgangsstrom.

Wie bereits erwähnt, wird die Änderung vom Netzbetrieb zum Notstrombetrieb dem erregerstromkreis 120 des Wechselrelais von der Steuer- und Überwachungseinrichtung mitgeteilt, so dass der jeweilige Zustand über die Leuchtdiode 200 beziehungsweise 210 dem Nutzer angezeigt werden kann. An dieser Stelle sei darauf hingewiesen, dass weitere Relais oder auch Wechselrelais an die Steuer- und Überwachungseinrichtung 30, 31 angeschlossen werden können. Die entsprechenden Ausgangsanschlüsse der jeweilige Ausgangsstromkreise sind in definierten Abständen zu dem Speiseausgang 140 angeordnet, um auf eine einfache Art und Weise sowie fehlergesichert eine parallele Anschaltung der Relais beziehungsweise der Ausgangsstromkreise der Relais mittels der Einlegebrücke 150 zu ermöglichen.

## Patentansprüche

1. Vorrichtung zur unterbrechungsfreien Stromversorgung mit
Eingangsanschlüssen (90, 91) zum Anschalten an eine primäre Gleichspannungs-Versorgungseinrichtung (230),
Anschlüssen (190, 191) zum Anschalten einer Ersatzstromquelle (60),
Ausgangsanschlüssen (100, 101) zum Anschalten einer Last (220),
einer Einrichtung (20) zum Entkoppeln der Eingangsanschlüsse (90, 91) von den Ausgangsanschlüssen (100, 101) bei Störung der primären Gleichspannungs-Versorgungseinrichtung (230), einer ersten steuerbaren Schalteinrichtung (40) zum gesteuerten Anschalten der Ersatzstromquelle (60) an die Ausgangsanschlüsse (100, 101) bei Störung der primären Gleichspannungs-versorgungseinrichtung (230), einer der ersten Schalteinrichtung (40) zugeordneten Steuereinrichtung (31), wobei
eine Parallelschaltung aus einer Diode (21) und einer zweiten steuerbaren Schalteinrichtung (22) die Entkopplungseinrichtung (20) bildet, dass
eine Überwachungseinrichtung (30) zur Überwachung einer Eingangsspannung vorgesehen ist, und dass
die Steuereinrichtung (31) die zweite steuerbare Schalteinrichtung (22) ausschaltet, wenn die überwachte Eingangsspannung eine Störung der primären Gleichspannungs-Versorgungseinrichtung (230) signalisiert.

2. Vorrichtung zur unterbrechungsfreien Stromversorgung nach Anspruch 1,
**dadurch gekennzeichnet, dass**
die zweite steuerbare Schalteinrichtung (22) ein Leistungstranssistor, insbesondere ein Feldeffekttransistor ist.

## Claims

1. Device for uninterruptible power supply having
input connections (90, 91) for connection to a primary direct voltage supply device (230), connections (190, 191) for connection of an alternative power source (60),
output connections (100, 101) for connection of a load (220),
a device (20) for decoupling the input connections (90, 91) from the output connections (100, 101) if there is a disruption in the primary direct voltage supply device (230),
a first controllable switching device (40) for controlled connection of the alternative power source (60) to the output connections (100, 101) if there is a disruption in the primary direct voltage supply device (230),
a control device (31) allocated to the first switching device (40), wherein
a parallel circuit consisting of a diode (21) and a second controllable switching device (22) forms the decoupling device (20), that a monitoring device (30) is provided for monitoring an input voltage, and that the control device (31) switches off the second controllable switching device (22) when the monitored input voltage signals a disruption in the primary direct voltage supply device (230).

2. Device for uninterruptible power supply as claimed in claim 1,
**characterised in that** the second controllable switching device (22) is a power transistor, in particular a field effect transistor.

## Revendications

1. Dispositif pour l'alimentation ininterrompue en courant comprenant des branchements d'entrée (90, 91) pour la connexion à un dispositif d'alimentation en tension continue primaire (230), des branchements (190, 191) pour la connexion d'une source électrique de remplacement (60), des branchements de sortie (100, 101) pour la connexion d'une charge (220), un dispositif (20) pour la dissociation des branchements d'entrée (90, 91) des branchements de sortie (100, 101) en cas d'incident du dispositif d'alimentation en courant continu primaire (230), un premier dispositif de commutation contrôlable (40) pour la connexion contrôlée de la source électrique de remplacement (60) aux branchements de sortie (100, 101) en cas d'incident du dispositif d'alimentation en courant continu primaire (230), un dispositif de commande (31) attribué au premier dispositif de commutation (40), un circuit parallèle constitué d'une diode (21) et d'un second dispositif de commutation (22) contrôlable formant le dispositif de dissociation (20), **caractérisé en ce qu'**un dispositif de surveillance (30) est prévu pour la surveillance d'une tension d'entrée, et **en ce que** le dispositif de commande (31) déconnecte le second dispositif de commutation contrôlable (22) lorsque la tension d'entrée contrôlée signale un incident du dispositif d'alimentation en courant continu primaire (230).

2. Dispositif pour l'alimentation ininterrompue en courant selon la revendication 1, **caractérisé en ce que** le second dispositif de commutation contrôlable (22) est un transistor de puissance, en particulier un transistor à effet de champ.
